# EUROPÄISCHE PATENTSCHRIFT

(11) **EP 1 732 775 B1**
(45) Veröffentlichungstag und Bekanntmachung des Hinweises auf die Patenterteilung: **09.01.2008**
(21) Anmeldenummer: 05715790.1
(22) Anmeldetag: 07.03.2005
(51) Int. Cl.: B60H 1/26

(54) **FAHRZEUGDACH MIT SOLARZELLEN UND EINER VORRICHTUNG ZUR BELÜFTUNG UND KÜHLUNG EINES KRAFTFAHRZEUGINNENRAUMES**
MOTOR VEHICLE ROOF WITH SOLAR CELLS AND A DEVICE FOR VENTILATING AND COOLING A MOTOR VEHICLE PASSENGER COMPARTMENT
TOIT D'AUTOMOBILE AVEC DES CELLULES SOLAIRE ET UN DISPOSITIF POUR VENTILER ET REFROIDIR L'HABITACLE D'UNE AUTOMOBILE

(30) Priorität: 09.03.2004 DE 102004011783
(43) Veröffentlichungstag der Anmeldung: 20.12.2006
(73) Patentinhaber: Webasto AG, 82131 Stockdorf (DE)
(72) Erfinder: TESCHNER, Helmut, 86899 Landsberg (DE); KÖLBL, Michael, 82061 Neuried (DE); POLLAK, Martin, 82178 Puchheim (DE); VILSMAYER, Sven, 82152 Krailling (DE); KOGLER, Rupert, 82166 Gräfelfing (DE); RENNER, Alfred, 82266 Inning (DE); ERBECK, Gerit, 85467 Niederneuching (DE); BOEHM, Hubert, 86926 Greifenberg (DE); LORENZ, Steffen, 85221 Dachau (DE); PÄTZ, Werner, 86928 Hofstetten (DE)
(74) Vertreter: Hannke, Christian
(86) Internationale Anmeldenummer: PCT/EP2005/002377
(87) Internationale Veröffentlichungsnummer: WO 2005/087525

(56) Entgegenhaltungen:
- EP-A- 1 477 393
- DE-C1- 4 022 928
- DE-U1- 29 618 135
- US-A- 5 672 101

## Beschreibung

Die Erfindung betrifft ein Fahrzeugdach mit Solarzellen und einer Vorrichtung zur Belüftung und Kühlung eines Kraftfahrzeuginnenraumes mit im Fahrzeugdach heckseitig angeordneten Lufteinlassöffnungen und mindestens einem damit verbundenen Luftführungskanal gemäß dem Obergriff des Patentanspruches 1.

Herkömmlicherweise wird ein Kraftfahrzeugsinnenraum durch Einblasen von das Kraftfahrzeug umgebende Außenluft in das Innere des Kraftfahrzeuges erreicht, wobei die Kühlung des aufgeheizten Innenraumes durch den Temperaturunterschied zwischen Außen- und Innentemperatur sowie die kühlende Wirkung der Luftströmung erzielt wird. Vorrichtungen für ein derartiges Zu- oder auch Abführen von Luft von außen nach innen beziehungsweise vice versa sind gemäß DE 40 22 928 C1 auch für den Dachbereich eines Kraftfahrzeuges bekannt. Sie bestehen in der Regel aus einem Ventilator, der im Bereich eines Dachauschnitts, welcher mittels eines herkömmlichen Schiebedachdeckels verschließbar ist, angeordnet ist.

Aus DE 39 38 259 C1 ist ein Kraftfahrzeug mit einem klappbaren Dachdeckel im Fahrzeugdach bekannt, wobei bei einem Aufklappen des Dachdeckels zwangsweise einen Lüfter in eine wirksame Stellung in einer Öffnung zwischen dem Dachdeckel und einem Fahrzeugdachöffnungsrahmen gebracht wird. Ein derartiger Lüfter kann mit einem dachseitig angebrachten Solarmodul elektrisch betrieben werden. Eine derartige Anordnung zum Belüften der Fahrgastzelle dient ebenso dazu, mittels des Lüfters Außenluft in das Innere der Fahrgastzelle zuzuführen, um das Fahrgastzelleninnere allein durch die zugeführte Außenluft zu kühlen. Eine derartige Außenluftstromzufuhr kann jedoch maximal eine 50 %ige Abkühlung des Innenraums erzielen, da die Außenluft - insbesondere an heißen Tagen - aufgrund einer starken Erwärmung nur sehr begrenzt zur Abkühlung eines aufgeheizten Fahrzeugraumes beiträgt.

Insbesondere bei der Verwendung von Glasdächern, die gegebenenfalls mit Solarzellen bestückt sind, findet eine stärkere Aufheizung des Fahrgastinnenraumes unmittelbar unterhalb des Glasdaches, also im oberen Bereich des Fahrgastinnenraumes, statt. Somit ist es wünschenswert, Außenluft vorrangig in diesem oberen Fahrgastinnenraumbereich einzublasen. Aus DE 42 04 785 A1 ist eine Anordnung zur Klimatisierung eines Fahrzeuginnenraumes bekannt, die zusätzlich einen an der unteren Innenseite des Fahrzeugdaches sich über die gesamte Länge des Fahrzeugdaches hinwegstreckenden Wärmetauscher aufweist, um die in eine Kassette, in welcher der Wärmetauscher angeordnet ist, eingeblasene Außenluft dazu zu nutzen, zusätzlich gekühlte Luft dem Fahrgastinnenraum zuzuführen. Derartige Wärmetauscher sind begrenzt in ihrer Abkühlungsfähigkeit in Abhängigkeit von der Temperatur der Außenluft. Zudem erfordern derartige Wärmetauscher die dachseitig angeordneten Kassetten, welche eine Reduzierung der Höhe des Fahrgastinnenraumes zur Folge haben. Weiterhin sind derartige Wärmetauscher in Kombination mit den Kassetten aufwendig in ihrer Konstruktion und kostenintensiv in ihrer Herstellung.

Demzufolge liegt der vorliegenden Erfindung die Aufgabe zugrunde, ein Fahrzeugdach mit einer Vorrichtung zur Belüftung und Kühlung eines Kraftfahrzeuginnenraumes zur Verfügung zu stellen, der auch bei hohen Außentemperaturen eine wirksame Abkühlung des Fahrzeuginnenraumes - vorzugsweise in dessen oberen Bereich - zulässt, einfach in ihrem Aufbau und kostengünstig in ihrer Herstellung ist.

Diese Aufgabe wird gemäß den Merkmalen des Patentanspruches 1 gelöst.

Kerngedanke der Erfindung ist es, dass bei einem Fahrzeugdach mit Solarzellen und einer Vorrichtung zur Belüftung und Kühlung eines Kraftfahrzeuginnenraumes mit im Fahrzeugdach heckseitig angeordneten Lufteinlassöffnungen und mindestens einem damit verbundenen Luftführungskanal dieser Luftführungskanal auf einen heckseitigen Bereich des Fahrzeugdaches begrenzt ist und innenseitig mindestens einen Lüfter zum Ansaugen von Außenluft und mindestens ein Kühlelement zum Kühlen der angesaugten Luft aufweist. Eine konstruktive Einfachheit wird dadurch erreicht, dass die Unterseite des Luftführungskanals durch einen ersten Abschnitt eines sich in Richtung von der Fahrzeugheck- zur Fahrzeugvorderseite hin erstreckenden Dachanteils und die Oberseite des Luftführungskanals durch einen zweiten Abschnitt eines sich in Richtung von der Fahrzeugvorder- zur Fahrzeugheckseite hin erstreckenden Dachanteils gebildet sind.

Da der Luftführungskanal auf den heckseitigen Bereich des Fahrzeugdaches begrenzt ist und der Lüfter sowie ein Kühlelement in diesen Luftführungskanal integriert ist, wird auf einfache Weise eine Vorrichtung zur Belüftung und Kühlung erhalten, die zum Einen dem Fahrgastinnenraum nicht in seiner Höhe reduziert und zum Anderen eine effektive Kühlung des Fahrgastinnenraumes mittels des Kühlelementes bewirkt. Ein derartiges Kühlelement kann vorzugsweise durch die Solarzellen mit Strom versorgt werden, sodass auch während des Zustands eines abgeschalteten Fahrzeugmotors eine effektive Kühlung des Innenraumes möglich ist, ohne hierzu die Fahrzeugbatterie unnötig zu belasten.

Die Solarzellen sind in dem zweiten Abschnitt oberhalb des Luftführungskanals fahrzeugdachaußenseitig angebracht und ermöglichen dadurch einen kurzen elektrischen Verbindungsweg zwischen den stromerzeugenden Solarzellen und den stromverbrauchenden Lüfter sowie dem stromverbrauchenden Kühlelement.

Vorzugsweise verläuft ein in dem Luftführungskanal erzeugter Luftstrom im Wesentlichen in Fahrzeuglängsrichtung derart, dass über die heckseitige angeordneten Lufteinlassöffnungen Außenluft angesaugt wird, wobei dieser Vorgang durch die Sogwirkung im Heckbereich des fahrenden Fahrzeuges unterstützt wird, und über Luftausslassöffnungen, die an einer zur Fahrzeugvorderseite hin gewandten Seite des Luftführungskanals angeordnet sind, in den Innenraum eingeblasen werden. Auf diesem sehr kurzen Luftstromweg streift der Luftstrom das Kühlelement, welches beispielsweise als Peltier-Kühlelement ausgebildet sein kann, um eine wirkungsvolle Abkühlung des Luftstromes zu erreichen. Ein derartiger sehr einfacher Aufbau der Vorrichtung zum Belüften und zur Kühlung des Fahrgastinnenraumes weist zudem die Vereinfachungsmerkmale der Bildung der Unter- und Oberseite durch Fahrzeugdachanteile auf. Hierdurch erübrigen sich zusätzliche Bauteile und Wände.

Der Lüfter kann sowohl als Axial- als auch als Radiallüfter oder jede weitere denkbare Art von Lüfter ausgebildet sein.

Um einen effektiven Luftstrom für eine wirksame Abkühlung des Innenraumes zu erhalten, können sich die Lufteinlassöffnungen, die Luftausslassöffnungen und der Luftführungskanal über die gesamte Fahrzeugdachbreite hinweg erstrecken. Eine derartige Anordnung wirkt sich zudem optisch vorteilhaft sowohl auf das Fahrzeugäußere als auch auf das Fahrzeuginnere aus. Zudem kann eine derartige Vorrichtung im Heckbereich eines kippbaren Dachdeckels oder zur zusätzlichen Bildung eines Spoilers optisch und funktionell gut integriert werden.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1:: In einer schematischen Seitenansicht einen Ausschnitt eines Fahrzeuges mit einem Fahrzeugdach mit einer Vorrichtung zur Belüftung und Kühlung gemäß einer Ausführungsform der Erfindung,
- Fig. 2:: In einer schematischen Seitenansicht einen Ausschnitt aus Fig. 1 in vergrößerter Darstellung mit einem eingezeichneten Luftstromweg.

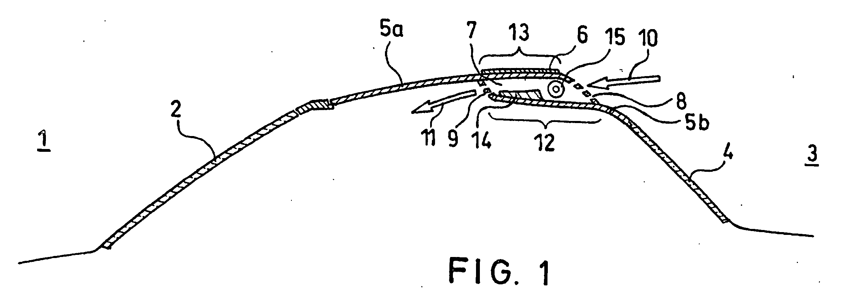

In Fig. 1 wird in einer schematischen Seitenansicht ein Ausschnitt eines Fahrzeuges mit einer Vorrichtung gemäß einer Ausführungsform der Erfindung gezeigt. Das Fahrzeug weist zur Fahrzeugvorderseite 1 hin eine Windschutzscheibe 2 auf und zur Fahrzeugheckseite 3 hin eine Heckscheibe 4 auf.

Ein sich von der Fahrzeugvorderseite 1 in Richtung zur Fahrzeugheckseite 3 erstreckender Fahrzeugdachanteil 5a kann kippbar ausgebildet sein und überlappt sichim heckseitigen Bereich des Fahrzeugdaches mit einem von der Fahrzeugheckseite 3 ausgehenden zur Fahrzeugvorderseite 1 verlaufenden Fahrzeugdachanteil 5b.

Solarzellen 6 sind oberhalb eines Luftführungskanals 7, der sich zwischen heckseitig angeordneten Lufteinlassöffnungen 8 und zur Fahrzeugvorderseite 1 hingewandte Luftauslassöffnungen 9 erstreckt, angeordnet. Der durch die Luftein- und auslassöffnungen bestimmte Luftstrom wird durch Pfeile 10, 11 dargestellt.

In dem überlappenden Bereich der Dachanteile 5a, 5b liegt ein erster Abschnitt 12 des Dachanteils 5b als Unterseite des Luftführungskanals 7 unterhalb eines zweiten Abschnittes 13 des Dachanteiles 5a, der zugleich die Oberseite des Lüftführungskanals bildet.

Innerhalb des Lüftführungskanals 7 ist ein Kühlelement 14 zur Kühlung des hindurchströmenden Luftstromes 10, 11 und ein Lüfter 15 zum Ansaugen der Außenluft in den Luftführungskanal angeordnet.

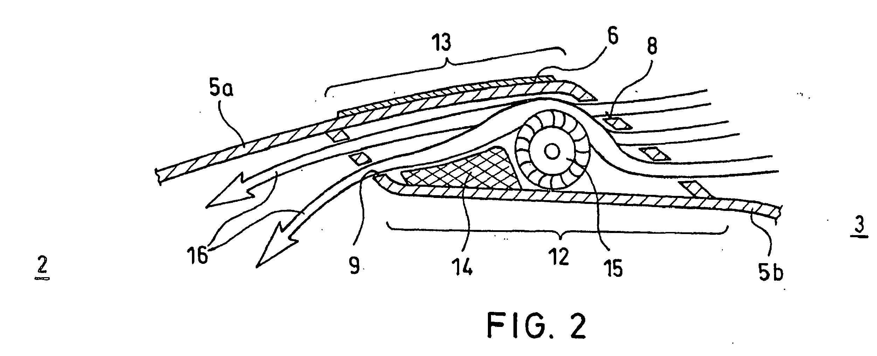

In Fig. 2 ist in einer schematischen Darstellung ein Abschnitt des in Fig. 1 gezeigten Fahrzeugdachs in vergrößerter Darstellung wiedergegeben. Ein in dieser Zeichnung dargestellter Luftstrom 16 gibt deutlich wieder, dass der Lüfter 15 die Außenluft über die Lufteinlassöffnung 8 ansaugt und durch seine Drehbewegung zwangsläufig an dem Kühlelement 14 vorbeileitet. Auf diese Weise wird der Luftstrom zuverlässig und effektiv auf eine gewünschte Abkühlungstemperatur gebracht, je nachdem auf welche Kühltemperatur das Kühlelement eingestellt worden ist. Auf diese Weise ist sogar eine Klimatisierung des Fahrgastinnenraumes, d.h. das Erreichen einer Innenraumtemperatur, die unterhalb der Außentemperatur liegt, möglich.

### Bezugszeichenliste

- 1: Fahrzeugvorderseite
- 2: Windschutzscheibe
- 3: Fahrzeugheckseite
- 4: Heckscheibe
- 5a, 5b: Fahrzeugdachanteile
- 6: Solarzellen
- 7: Luftführungskanal

- 8: Lufteinlassöffnungen
- 9: Luftauslassöffnungen
- 10: Außenluft
- 11: In den Fahrgastinnenraum einströmende Luft
- 12: 1. Abschnitt
- 13: 2. Abschnitt
- 14: Kühlelement
- 15: Lüfter
- 16: Luftstrom

## Patentansprüche

1. Fahrzeugdach (5a, 5b) mit Solarzellen (6) und einer Vorrichtung zur Belüftung und Kühlung eines Kraftfahrzeuginnenraumes mit im Fahrzeugdach (5a, 5b) heckseitig angeordneten Lufteinlassöffnungen (8) und mindestens einem damit verbundenen Luftführungskanal (7) wobei der Luftführungskanal (7) innenseitig mindestens einen Lüfter (15) zum Ansaugen von Aussenluft (10) umfasst,
**dadurch gekennzeichnet, dass**
der Luftführungskanal (7) auf einen heckseitigen Bereich (3) des Fahrzeugdachs (5a, 5b) begrenzt ist, wobei die Unterseite des Luftführungskanals (7) durch einen ersten Abschnitt (12) eines sich in Richtung von der Fahrzeugheck- zur Fahrzeugvorderseite (3, 1) hin erstreckenden Dachanteils (5b) und die Oberseite des Luftführungskanals (7) durch einen zweiten Abschnitt (13) eines sich in Richtung von der Fahrzeugvorder- zur Fahrzeugheckseite (1, 3) hin erstreckenden Dachanteils (5a) gebildet sind.

2. Fahrzeugdach nach Anspruch 1,
**dadurch gekennzeichnet, dass**
die Solarzellen (6) in dem zweiten Abschnitt (13) oberhalb des Luftführungskanals (7) fahrzeugdachaussenseitig angebracht sind.

3. Fahrzeugdach nach Anspruch 1 oder 2
**dadurch gekennzeichnet, dass**
ein Luftstrom (16) innerhalb des Luftführungskanals (7) im Wesentlichen in Fahrzeuglängsrichtung verläuft.

4. Fahrzeugdach nach einem der vorangegangenen Ansprüche,
**dadurch gekennzeichnet, dass**
dem Fahrzeuginnenraum zugewandte Luftauslassöffnungen (9) an einer der Fahrzeugvorderseite (1) hingewandten Seite des Luftführungskanals (7) angeordnet sind.

5. Fahrzeugdach nach einem der vorangegangen Ansprüche,
**dadurch gekennzeichnet, dass**
der Lüfter (15) ein Axiallüfter ist.

6. Fahrzeugdach nach einem der Ansprüche 1 - 4,
**dadurch gekennzeichnet, dass**
der Lüfter (15) ein Radiallüfter ist.

7. Fahrzeugdach nach einem der Ansprüche 4 - 6,
**dadurch gekennzeichnet, dass**
sich die Lufteinlassöffnungen (8), der Lüftführungskanal (7) und die Luftauslassöffnungen (9) über die gesamte Fahrzeugdachbreite hinweg erstrecken.

8. Fahrzeugdach nach einem der vorangegangenen Ansprüche,
**dadurch gekennzeichnet, dass**
das Kühlelement (14) ein Peltier-Kühlelement ist.

## Claims

1. Vehicle roof (5a, 5b) with solar cells (6) and a device for ventilating and cooling the interior of a vehicle with air inlet openings (8) located in the rear of the vehicle roof (5a, 5b) and at least one air guide channel (7) connected to it, wherein the air guide channel (7) on the inside comprises at least one fan (15) for intaking outside air (10),
**characterized in that**
the air guide channel (7) is restricted to the rear area (3) of the vehicle roof (5a, 5b), the bottom of the air guide channel (7) being formed by a first section (12) of a roof portion (5b) which extends in the direction from the vehicle rear to the vehicle front (3, 1) and the top of the air guide channel (7) being formed by a second section (13) of a roof portion (5a) which extends in the direction from the vehicle front to the vehicle rear (1, 3).

2. Vehicle roof as claimed in claim 1, wherein the solar cells (6) in the second section (13) are mounted above the air guide channel (7) on the outside of the vehicle roof.

3. Vehicle roof as claimed in claim 1 or 2, wherein the air flow (16) runs within the air guide channel (7) essentially in the lengthwise direction of the vehicle.

4. Vehicle roof as claimed in one of the preceding claims, wherein the air outlet openings (9) facing the vehicle interior are located on one side of the air guide channel (7) which is turned toward the vehicle front (1).

5. Vehicle roof as claimed in one of the preceding claims, wherein the fan (15) is an axial fan.

6. Vehicle roof as claimed in one of the claims 1-4, wherein the fan (15) is a radial fan.

7. Vehicle roof as claimed in one of the claims 4-6, wherein the air inlet openings (8), the air guide channel (7) and the air outlet openings (9) extend beyond the entire vehicle roof width.

8. Vehicle roof as claimed in one of the preceding claims, wherein the cooling element (14) is a Peltier cooling element.

## Revendications

1. Toit de véhicule automobile (5a, 5b) avec des cellules solaires (6) et un dispositif pour ventiler et refroidir un habitacle de véhicule automobile avec des ouvertures d'entrée d'air (8) disposées vers l'arrière du toit de véhicule automobile (5a, 5b) et au moins un canal de canalisation d'air (7) connecté avec celles-ci, le canal de canalisation d'air (7) contenant intérieurement au moins un ventilateur (15) pour aspirer de l'air extérieur (10),
**caractérisé en ce que** le canal de canalisation d'air (7) est délimité dans une région arrière du toit de véhicule automobile (5a, 5b), la paroi inférieure du canal de canalisation d'air (7) étant formée par une première portion (12) d'une partie de toit (5b) s'étendant dans la direction de la partie arrière du véhicule automobile vers la partie avant du véhicule automobile, et la paroi supérieur du canal de canalisation d'air (7) est formée par une deuxième portion d'une partie de toit (5b) s'étendant dans la direction de la partie avant du véhicule automobile vers la partie arrière du véhicule automobile.

2. Toit de véhicule automobile selon la revendication 1, **caractérisé en ce que** les cellules solaires (6) sont placées du côté extérieur du toit de véhicule automobile sur la deuxième portion (13) au-dessus du canal de canalisation d'air (7).

3. Toit de véhicule automobile selon la revendication 1 ou 2, **caractérisé en ce que** un flux d'air (16) circule à l'intérieur du canal de canalisation d'air (7) principalement selon la direction longitudinale du véhicule automobile.

4. Toit de véhicule automobile selon l'une quelconque des revendications précédentes, **caractérisé en ce que** il comprend des ouvertures de sortie d'air (9) débouchant dans l'habitacle de véhicule automobile, et situées à une extrémité du canal de canalisation d'air (7) du côté de la partie avant du véhicule automobile.

5. Toit de véhicule automobile selon l'une quelconque des revendications précédentes, **caractérisé en ce que** le ventilateur (15) est un ventilateur axial.

6. Toit de véhicule automobile selon l'une quelconque des revendications 1 à 4, **caractérisé en ce que** le ventilateur (15) est un ventilateur radial.

7. Toit de véhicule automobile selon l'une quelconque des revendications 4 à 6, **caractérisé en ce que** les ouvertures d'entrée d'air, le canal de canalisation d'air (7), et les ouvertures de sortie d'air (9) s'étendent sur toute la largueur du toit de véhicule automobile.

8. Toit de véhicule automobile selon l'une quelconque des revendications précédentes, **caractérisé en ce que** l'élément de refroidissement (14) est un élément de refroidissement Peltier.
